Europäisches Patentamt

European Patent Office

Office européen des brevets

(19)

(11) EP 0 709 712 A2

(12) EUROPEAN PATENT APPLICATION

(43) Date of publication:
01.05.1996 Bulletin 1996/18

(51) Int. Cl.⁶: $G02F\ 1/07$, $E06B\ 3/66$

(21) Application number: 95117153.7

(22) Date of filing: 31.10.1995

(84) Designated Contracting States:
DE FR GB IT

(30) Priority: 31.10.1994 JP 267890/94

(71) Applicants:
• FUJIKURA LTD.
Koto-ku Tokyo (JP)
• FUJIKURA KASEI CO., LTD.
Itabashi-Ku Tokyo-To (JP)

(72) Inventors:
• Anzai, Hidenobu
Itabashi-ku, Tokyo (JP)
• Edamura, Kazuya
Minato-ku, Tokyo (JP)
• Akashi, Kazuya
Inbagun, Chiba-ken (JP)
• Otsubo, Yasufumi
Inage-ku, Chiba-shi, Chiba-ken (JP)

(74) Representative: Grünecker, Kinkeldey,
Stockmair & Schwanhäusser
Anwaltssozietät
Maximilianstrasse 58
D-80538 München (DE)

(54) **Transmitted light intensity controllable window**

(57) A window controllable arbitrarily in transmitted light intensity. The window is composed of a hollow housing (7) having two surfaces (2, 3) substantially parallel to each other, at least a portion of each of which is transparent, and which are disposed in opposed relation to each other. First and second transparent electrodes (4, 5) are formed on the opposed surfaces (2, 3) of the housing (7), respectively. In addition, an electro-optical fluid composition (10), being produced by adding electric alignment solid particles (12) into an electrical insulating medium (11), is packed within the housing (7). In response to application of a voltage to the fluid composition (10), the electric alignment solid particles (12) are electro-aligned so that the housing (7) changes from an opaque state to a transparent state.

FIG.1

**Description**

BACKGROUND OF THE INVENTION

[Field of the Invention]

The present invention relates to a window such as a skylight and peek-window substantially located horizontally and controllable arbitrarily in transmitted light intensity.

[Description of the Prior Art]

Skylights have been provided currently for the lighting purposes, and in addition, the role of the skylights is recently spreading out into interior designs for art galleries, museums and hotels, and further into such applications as astronomical observation for enjoying an outdoor view while staying in a room. In general, for construction of the skylight, a transparent glass plate or transparent plastic plate is fitted in a ceiling, and for adjustment of the lighting quantity and from the viewpoint of protection of the privacy, a light-shielding device such as a curtain and shade freely openable and closable needs to be set over the skylight. A serious problem exists, however, in that there is a need for an additional mechanism for opening and closing such a light shielding device, besides considerable difficulty is experienced in the installation of this opening and closing mechanism, for that the skylight is commonly provided at a relatively high location.

SUMMARY OF THE INVENTION

It is therefore an object of the present invention to provide a window which has a function to arbitrarily control transmitted light intensity.

One feature of this invention is the utilization of an electro-optical fluid composition (an EA fluid). This composition is a fluid produced, for example, by dispersing solid particles in an electrical insulating medium, and in response to application of an electric field thereto, the solid particles establish dielectric polarization, and are aligned with each other and arranged in the field direction due to the electrostatic attractive force caused by the dielectric polarization, thus producing chain bodies (configurations). In addition, some of solid particles have an electrophoretic property, and in response to application of an electric field thereto, are electrophoretically moved toward electrode sections to be arranged and oriented to take an arranged massive structure. The fact that the arrangement and orientation of particles take place under an electric field is called an electric alignment effect (EA effect), and the solid particles which exhibit such an electric alignment effect are referred to as electric alignment particles (EA particles). The operational principle of the EA fluid will become apparent as the description proceeds.

According to an aspect of the present invention, there is provided a window comprising: a hollow housing having two surfaces substantially parallel to each other, at least a portion of each of which is transparent, and which are disposed in opposed relation to each other; first transparent electrode means formed on one of the opposed surfaces of the housing; second transparent electrode means formed on the other surface of the housing; and an electro-optical fluid composition produced by adding electric alignment solid particles into an electrical insulating medium and packed within the housing.

The electric alignment solid particles are in a floating or sinking state in the electrical insulating medium. The first transparent electrode means comprises one or more first line electrodes and one or more second line electrodes, and the second transparent electrode means comprises one plane electrode. In this case, the electric alignment solid particles are in a floating state in the electrical insulating medium in a state in which the first transparent electrode means is positioned above the second transparent electrode, and the electric alignment solid particles are in a sinking state in the electrical insulating medium when the first transparent electrode means is positioned under the second transparent electrode.

In the windows according to the present invention, when a voltage is applied to the EA fluid packed in the housing, the solid particles can be aligned so as to control the quantity of light passing into transparent sections of the housing, thus obtaining a desired transmitted light intensity only by the energization control. In other words, with the energization being made to the transparent electrodes of the hollow housing including the EA fluid, the window can take a transparent state, and the window can take an opaque state in response to the energization to the transparent electrodes being stopped. Thus, the incident sunlight intensity, i.e., the transmitted light intensity of the window, is readily controllable.

BRIEF DESCRIPTION OF THE DRAWINGS

The object and features of the present invention will become more readily apparent from the following detailed description of the preferred embodiments taken in conjunction with the accompanying drawings in which:

Fig. 1 is a cross-sectional view showing a structure of a window according to an embodiment of the present invention;
Fig. 2 is a cross-sectional view showing a structure of EA particles of an EA fluid to be used in this invention;
Fig. 3 is an explanatory illustration of a state of EA particles when the Fig. 1 window is in deenergized state;
Fig. 4 is an explanatory illustration of a state of EA particles when the Fig. 1 window is in energized state;

Fig. 5 is an illustration of columns formed with EA particles;

Fig. 6 is an explanatory illustration of dielectric polarization of EA particles;

Fig. 7 is a cross-sectional view useful for explanation of a coloring state of EA particles;

Fig. 8 is a perspective view showing a mode in which a window according to this invention is applied to a skylight;

Fig. 9 is a perspective view showing another mode in which a window according to this invention is applied to a skylight;

Fig. 10 is a perspective view showing a mode in which a window according to this invention is located at a bottom of a pleasure boat;

Fig. 11 is a perspective view showing another mode in which a window according to this invention is located at a bottom of a pleasure boat;

Fig. 12 is a cross-sectional view showing a window according to another embodiment of this invention wherein EA particles are in a non-energized state;

Fig. 13 is a development showing first and second electrodes of a window according to a further embodiment of this invention;

Fig. 14 is a cross-sectional view showing a state of EA particles in the Fig. 13 window at the time of application of a voltage thereto; and

Fig. 15 is a graphic illustration of the relationship between a wavelength and a transmitted light intensity taken in an EA fluid.

## DETAILED DESCRIPTION OF THE INVENTION

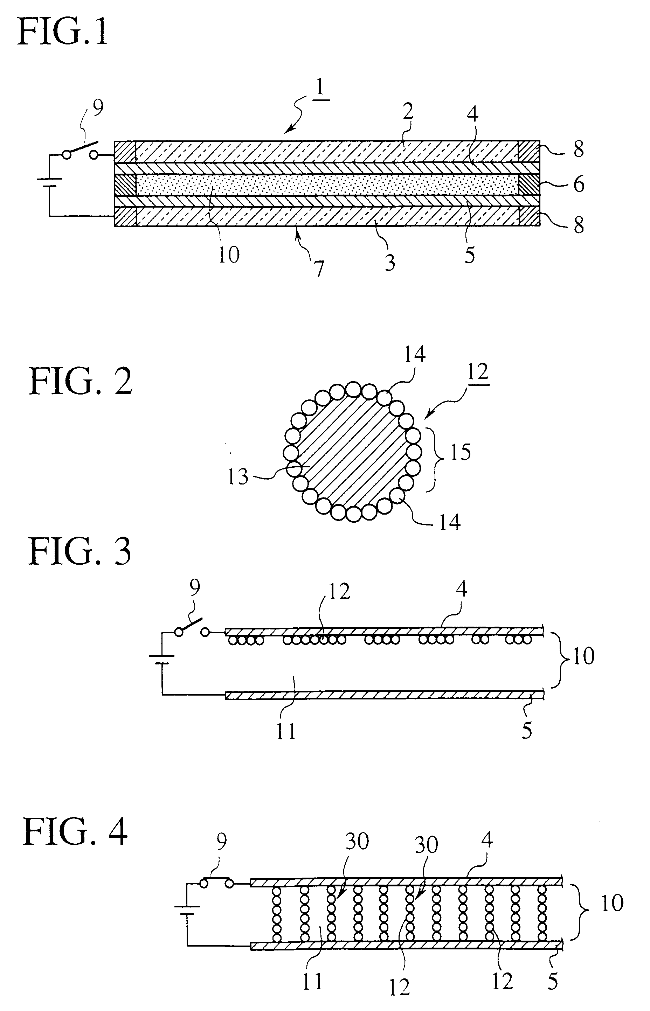

Referring now to Fig. 1, a description will be made in terms of a window according to an embodiment of this invention. In Fig. 1, a window, designated at numeral 1, is provided with a pair of transparent substrates (plates) 2, 3 horizontally disposed in opposed, parallel relation to each other to be spaced by a given distance from each other. The upper transparent substrate 2 has, thereon, first and second transparent electrodes 4, 5, respectively. The first and second transparent electrodes 4, 5 have plane configurations (layer configurations) to substantially cover the whole inner surfaces of the transparent substrates 2, 3 facing each other. In addition an EA fluid 10, which will be described in detail later, is packed between the transparent substrates 2, 3. A sealing member 6, having a given thickness, is fitted in between the circumferential sections of the transparent substrates 2, 3, thus forming a plate-like hollow transparent housing 7. Moreover, at the circumferential sections of the transparent substrates 2, 3, there are set electrode sections 8 electrically coupled to the first and second transparent electrode layers 4, 5 and further, as illustrated, connected through a switch 9 to a power supply. Because of being required to be endurable against transport and installation, it is desirable that the aforesaid transparent substrates 2, 3 are composed of a glass plate or a transparent resin plate such as an acrylic resin plate.

In this embodiment, the whole surfaces of the substrates 2, 3 are not always required to be transparent, but it is also acceptable that only the light transmission portions are transparent. For this reason, it is also possible that only the circumferential sections are made with opaque metallic frames, resin frames or the like and glass plates or resin plates are fitted in the frames. The window 1 is not particularly limited to its configuration, but commonly take a plate-like configuration.

The aforementioned EA fluid 10 is basically produced with inorganic and organic composite particles (solid particles, which will be referred hereinafter to as EA particles) 12 which have a structure as shown in Fig. 2 being dispersed in an electrical insulating medium (11). Each of the EA particles 12, as shown in Fig. 2, is composed of a core body 13 made of a polymer compound and a surface layer 15 made of an inorganic material exhibiting an electric alignment effect (which will be referred hereinafter to as an inorganic EA material) 14 and formed to cover the surface of the core body 13. Although in Fig. 2 a single surface layer, made of tightly aligned inorganic EA material, is illustrated as the surface layer 15, it is also possible that two or more layers are formed thereon as the surface layer 15, or that the surface layer 15 is formed with roughly aligned inorganic EA material. As will be described later, the color of the EA fluid 10 depends upon the colors of the electrical insulating medium 11, core body 13 and inorganic EA material 14.

As desirable examples of the inorganic EA materials 14 there are inorganic ion exchangers such as hydroxides of polyvalent metals, hydrotalcites, acid salts of polyvalent metals, hydroxyapatites, nashicon-type compounds, clay minerals, potassium titanates, heteropolyacid salts and insoluble ferrocyanides, and further silica gels and electrical semiconductive inorganic materials. When such an inorganic EA material 14 forms the surface layer 15 on the core body 13 made of a polymer compound, the EA fluid 10 gets to have the electric alignment effect. For production of the EA particles 12, it is preferable that the surface layer 15 and the core body 13 are formed simultaneously.

Among the polymer compounds usable for the core bodies 13 of the EA particles 12 are polyacrylate, methacrylate, methacrylate-styrene copolymers, polystyrene, polyethylene, polypropylene, nitrile rubber, butyl rubber, ABS resin, nylon, polyvinyl butylate, ionmer, ethylene-vinyl acetate copolymer, vinyl acetate resin, polycarbonate resin and others, mixtures including one or more of these materials, or copolymers.

Furthermore, as the preferable materials suitable for the surface layers 15 of the EA particles 12, there are inorganic ion exchangers, electrical semiconductive inorganic material s and silica gels. If the solid particles made with these materials are dispersed in the electrical insulating medium 11, an excellent electric alignment effect takes place. As examples of the inorganic ion exchangers, there are hydroxides of polyvalent metals, hydrotalcites, acid salts of polyvalent metals, hydroxyapatite, nashicon-type compounds, clay minerals, potassium titanates, heteropolyacid salts and insoluble ferrocyanides.

A detailed description will be made hereinbelow in terms of these inorganic ion exchangers.

## (1) hydroxides of polyvalent metals

These compounds are expressed with a general formula $MO_x(OH)_y$ (M designates a polyvalent metal, x represents a number above 0, and y denotes a positive number). For example, among the hydroxides of polyvalent metals are titanium hydroxides, zirconium hydroxides, bismuth hydroxides, tin hydroxides, lead hydroxides, aluminum hydroxides, tantalum hydroxides, niobium hydroxides, molybdenum hydroxides, magnesium hydroxides, manganese hydroxides, iron hydroxides and so on. For instance, the titanium hydroxides include hydrous titanium oxides (another name : metatitanic acid or b titanic acid, $TiO(OH)_2$) and titanium hydroxides (another name : orthotitanic acid or a titanic acid, $Ti(OD)_4$). This also applies to other compounds.

## (2) hydrotalcites

These compounds are expressed with a general formula $M_{13}Al_6(OH)_{43}(CO)_3 \cdot 12H_2O$ (M depicts a bivalent metal). For example, a bivalent metal M is Mg, Ca, Ni or others.

## (3) acid salts of polyvalent metals

These materials include titanium phosphates, zirconium phosphates, tin phosphates, cerium phosphates, chrome phosphates, zirconium arsenates, titanium arsenates, tin arsenates, cerium arsenates, titanium antimonates, tin antimonates, tantalum antimonates, niobium antimonates, zirconium tungstates, titanium vanadates, zirconium molybdates, titanium selenates, tin molybdates, and so on.

## (4) hydroxyapatites

These materials include, for example, calcium apatites, lead apatites, strontium apatites, cadmium apatites, and so on.

## (5) nashicon-type compounds

While these materials include, for example, $(H_3O)Zr_2(PO_4)_3$, in this invention, it is also possible to use nashicon-type compounds in which $H_3O$ is substituted by Na.

## (6) clay minerals

These materials are, for example, montmorillonites, sepiolites, bentonites, and other minerals. Of these, the sepiolite is particularly preferable.

## (7) potassium titanates

These are expressed by general formula $aK_2O \cdot bTiO_2 \cdot nH_2O$ (a represents a positive number satisfying $0 < a \leqq 1$, and b denotes a positive number satisfying $1 \leqq b \leqq 6$, and n depicts a positive number), for instance, including $K_2 \cdot TiO_2 \cdot 2H_2O$, $K_2O \cdot 2TiO_2 \cdot 2H_2O$, $0.5K_2O \cdot TiO_2 \cdot 2H_2O$, $K_2O \cdot 2.5TiO_2 \cdot 2H_2O$, and so on. Of these compounds, the compounds in which a or b is not integer can easily be produced with the compounds in which a or b is an integer being acidificated and K being substituted by H.

## (8) heteropolyacid salts

These are expressed by general formula $H_3AE_{12}O_{40} \cdot nH_2O$ (A represents a phosphorus, arsenic, germanium, or silicon, and E denotes a molybdenum, tungsten, or vanadium, and n indicates a positive number), for example, including ammonium molybdophosphates, and ammonium tungstophosphates.

## (9) insoluble ferrocyanides

These are expressed by a general formula $Mb_{-pxa}A[E(CN)_6]$ where M represents an alkali metal or hydrogen ion, A designates a heavy metal ion such as lead, copper, nickel, cobalt, manganese, cadmium, iron (III) and titanium, E denotes iron (II), iron (III) cobalt or the like, b depicts 4 or 3, a indicates the valency of A, and p stands for a positive number of 0 to b/a, for example including insoluble ferrocyan compounds such as $Cs_2Zn[Fe(CN)_6]$ and $K_2Co[Fe(CN)_6]$.

The above-mentioned inorganic ion exchangers in (1) to (6) have an OH group, and include substitution type ion exchanges in which a portion or all the ions present in the ion exchange site of these inorganic ion exchangers are substituted by another ions. That is, if the aforesaid inorganic ion exchangers are expressed by R-$M^1$ ($M^1$ represents the ionic species in the ion exchange site), this invention includes a substitution type inorganic ion exchanger in which a portion or all of $M^1$ of R-$M^1$ is substituted by an ionic species $M^2$ different from the M1. That is,

$$xR - M^1 + yM^2 \rightarrow R_x - (M^2)_y + xM^1$$

where x and y represent the valencies of ionic exchange species $M^2$ and $M^1$, respectively.

Depending upon the kind of the inorganic ion exchanger having an OH group, $M^1$ is generally $H^+$ in a case where the inorganic ion exchanger shows the cation exchangeability. In this case, $M^2$ can arbitrarily selected from metallic ions such as an alkali metal, alkaline earth metal, polyvalent typical metal, transition metal, and rare earth metal, other than $H^+$. In the case that the inorganic ion exchanger having the OH group indicates anion exchangeability, $M^1$ is generally $OH^-$, and in this case, $M^2$ is arbitrarily selectable from all the anions other than $OH^-$ which include such as I, CI, SCN, $NO_2$, Br, F, $CH_3COO$, $SO_4$, $CrO_4$, composite ions, and so on.

Moreover, in the inorganic ion exchangers in which, being once lost due to the high-temperature heating process, the OH group is again added through the water-submerged process or the like, the inorganic ion exchanger after the high-temperature heating processing is also one of the inorganic ion exchangers usable in this invention, for example, nashicon-type compounds such as the materials obtained by heating, at a high temperature (500 to 700°C), hydrotalcite and $HZr_2(PO_4)_3$ obtainable by heating $(H_3O)Zr_2(PO_4)_3$. One or a plurality of ones of these inorganic ion exchanges can be used as the surface layer. As the inorganic ion exchangers, hydroxides of polyvalent metals or acid salts of polyvalent metals are particularly preferable.

As the other inorganic EA material s 14 suitable for the surface layers 15 of the EA particles 12, there are metallic oxides, metallic hydroxides, hydroxides of metal oxides, inorganic ion exchangers, one of these materials metal-doped, one of these materials placed as the electrical semiconductive layer on another carrier regardless of metal doping, and so on, which have electric conductivities of $10^3 \Omega^{-1}/cm$ to $10^{-11} \Omega^{-1}/cm$.

A further description will be made hereinbelow in terms of other inorganic EA material s 14. That is, there are:

(A) metallic oxides : for example, $SnO_2$, amorphous type titanium dioxides (produced by Idemitsu Sekiyu Kagaku Co. Ltd.);
(B) metallic hydroxides : for example, titanium hydroxides, niobium hydroxides. The titanium hydroxides hydrous titanium oxides (produced by Ishihara Sangyo Co., Ltd.), metatitanic acid (another name: b titanic acid, $TiO(OH)_2$) and orthotitanic acid (another name : a titanic acid, $Ti(OD)_4$);
(C) hydroxides of metal oxides : for example, FeO (OH) (gacite);
(D) hydroxides of polyvalent metals : the same compounds as the aforementioned (1);
(E) hydrotalcites : the same compounds as the aforesaid (2);
(F) acid salts of polyvalent metals : the same materials as the foregoing (3);
(G) hydroxyapatites : the same materials as the foregoing (4);
(H) nashicon-type compounds : the same materials as the aforementioned (5);
(I) clay minerals : the same materials as the aforementioned (6);
(J) potassium titanates : the same materials as the aforesaid (7);
(K) heteropolyacid salts : the same materials as the foregoing (8);
(L) insoluble ferrocyanides : the same materials as the foregoing (9);

(M) metal-doped inorganic EA materials : for improving the electric conductivity of the aforementioned (A) to (L), a metal such as antimony (Sb) is doped into an inorganic EA material 14, for example, antimony-doped tin oxides ($SnO_2$); and
(N) inorganic EA material s placed as electrical semiconductive layers on other carriers : for example, among the carriers are inorganic particles made with titanium oxide, silica, alumina, silica-alumina or the like or polymer particles made with polyethylene, polypropylene or the like, and among the electrical semiconductive layer materials are antimony (Sb)-doped tin oxides.

The particles containing the inorganic EA material wholly become inorganic EA material s. The surface layer can simultaneously contain the two or more inorganic EA material s mentioned above.

The inorganic and organic composite particles (EA particles) 12 can be produced in various ways. As one example, there is a way in which the core body particles 13 made of an inorganic and organic composite compound and the fine particles made of an inorganic EA material 14 are carried by means of a jetstream to come into collision with each other. In this case, the inorganic EA fine particles 12 run into the surfaces of the core body particles 13 at a high speed, thus being fixed thereto to form the surface layers 15 thereon. Another way is that the core body particles 13 are treated to float in a gas and a solution containing the inorganic EA material is sprayed toward the floating core body particles 13. In this case, after being adhered thereonto, the solution is dried to form the surface layers 15.

For production of the EA particles 12, the core bodies 13 and the surface layers 15 are preferable to be formed simultaneously. In this method, while the monomer of the polymer compound for forming the core bodies 13 is emulsion-polymerized, suspension-polymerized or dispersion-polymerized in a polymerization medium, the inorganic EA fine particles 14 are add to the monomer or the polymerization medium. The polymerization medium is preferable to be water, while a mixture of water and a water soluble organic solvent, and organic lean-solvent are also usable. According to this method, the monomer is polymerized in the polymerization medium to form core body particles, and at the same time the inorganic EA fine particles 14 are aligned on the surfaces of the core body particles 13 so as to form surface layers 15 on the surfaces thereof, thus coating the core body particles 31.

In producing the inorganic and organic composite particles 12 by means of the emulsion polymerization or suspension polymerization, a combination of the hydrophobic property of the monomer and the hydrophilic property of the inorganic EA material 14 allows most of the inorganic EA materials 14 to be aligned on the surfaces of the core body particles 13. According to the simultaneous formation method for the core bodies 13 and surface layers 15, the inorganic EA particles 14 can strongly and finely be adhered onto the surfaces of the core body particles 13 being made of a polymer compound, resulting in being firm inorganic and organic composite particles 12.

In this invention, the EA particles 12 being used is not necessarily limited to spherical configurations, while, by means of the core body particle adjusting emulsion polymerization or suspension polymerization, the resultant EA particles 12 have substantially spherical configurations. If having the spherical configurations, as compared with other configurations it is advantageous in adjusting the transmitted light intensity because light can be scattered omnidirectionally.

Although the diameters of the EA particles 12 is not particularly limited, they are preferable to be 0.1 to 500 mm, particularly 5 to 200 mm. Further, although the diameters of the inorganic EA particles 12 are not particularly limited, they are preferable to be 0.005 to 100 mm, more preferably 0.01 to 10 mm.

In the EA particles 12, the weight rate (%) of the inorganic EA material 14 for formation of the surface layer 15 and the polymer compound for formation of the core body 13 is not particularly limited, while, for example, the weight rate of (inorganic EA material) : (polymer compound) is preferable to be in the range of (1 to 60): (99 to 40), particularly preferable to be in the range of (4 to 30): (96 to 70). If the weight rate of the inorganic EA material 14 is below 1%, the resultant EA fluid 10 does not sufficiently show the EA effect. On the other hand, if exceeding 60%, the resultant EA fluid 10 has a conductive property.

The specific gravity of the EA particles 12 can relatively be made small as compared with the EA material 14 for the formation of the surface layers 15, for that the polymer compound with a relatively small specific gravity can be used for the core bodies 13. The specific gravity of the EA particles 12 is freely adjustable with the kinds and rates of the polymer compound and the inorganic EA material 14, while the specific gravity is generally set to be approximately 1.0 to 2.0 taking the electrical insulating medium to be used into consideration.

The surface layers 15 or core bodies 13 of the EA particles 12 can contain a coloring material. The coloring material usable for the surface layers 15 is a pigment. It is desirable that the pigment is mixed into the inorganic EA material 14 in forming the surface layers 15 being made of inorganic EA material 14 on the core bodies 13 in accordance with the foregoing method. For giving the coloring material into the core bodies 13, it is possible to use a pigment or dye known as the coloring material for the synthetic resin. This coloring material can be in advance mixed into the monomer for the formation of the core bodies 13 before the monomer is polymerized, or can be put in the synthetic resin for the formation of the core bodies 13. With the EA particles 12 in which at least one of the surface layer 15 and the core body 13 contains the coloring material, the scattering light from the resultant EA fluid 10 at no application of voltage thereto can freely take various colors. For example, when a titanium hydroxide or silica gel is mixed thereinto, the EA fluid 10 can be colored in white, and when a copper phthalocyanine blue (produced by Dainichi Seika Kogyo Co., Ltd., cyanine blue S-32) being a blue pigment is mixed thereinto, the EA fluid 10 can be colored in blue, and when a first yellow (NL first yellow 5G(S), produced by Dainichi Seika Kogyo Co., Ltd.) being a yellow pigment is mixed thereinto, the EA fluid 21 can be colored in yellow. In addition, when a magnetite ($Fe_3O_4$) being an electrical semiconductive inorganic material is mixed thereinto, the EA fluid 10 can be colored in black, and when a ferric oxide ($Fe_2O_3$) being an electrical semiconductive inorganic material is mixed into, the EA fluid 10 can be colored in red.

In the EA particles 12 produced in the above-mentioned various ways, particularly, produced in the method in which the core bodies 13 and surface layers 15 are simultaneously producible, a portion or whole of the surface layers 15 is covered with a polymer material or thin films of additives such as dispersants and emulsifiers used in producing processes, whereby there is the possibility that the EA effect of the inorganic EA material 14 fine particles is unsatisfactorily shown. These inert material films is readily removable by polishing of the EA particles 12.

The surface polishing of the EA particles 12 can be achieved in various ways. For instance, the EA particles 12 are dispersed in a dispersion medium such as water before stirred. In this case, it is also possible that abrasives such as sand particles and small balls are mixed into the dispersion medium and stirred together with EA particles 12, or that the stirring is carried out using grinding stones. Moreover, it is also appropriate that the EA particles 12 are dry-stirred using the abrasives and grinding stones without using such a dispersion medium.

A more preferable polishing method is to stir the EA particles 12 by means of a jetstream or the like. The particles violently come into collision with each other due to the jetstream. As preferable points, this method does not require abrasives, and can easily separate the inert materials peeled from the particle surfaces in classification. In the case of the aforesaid jetstream stirring, although difficulty is experienced in some degree to determine the polishing conditions on the basis of the kind of the stirring apparatus, stirring speed, and the kind of the material of the inorganic and organic composite particles, it is generally desirable that, for example, the stirring speed is 6000 rpm and the stirring time is 5 to 15 minutes.

The EA fluid 10 in this invention is producible with the EA particles 12 and, it required, other components such as dispersants being stirred and uniformly mixed into the electrical insulating medium 29 described above. Any kind of stirring machine is usable which is generally used in order to disperse solid particles in a liquid dispersion medium.

For the electrical insulating medium of the EA fluid 10, all the materials which have been used for the electric alignment fluids can be employed. As examples, there are diphenyl chlorides, butyl sebacates, aromatic polycarbonate higher alcohol esters, halophenyl alkyl ethers, transformer oils, paraffin chlorides, fluorine-based oils, silicone-based oils, fluorosilicone-based oils and others, although any fluid and mixture are usable as long as being chemically stable and allowing the stable dispersion of the EA particles.

In this case, since the EA particles 12 float in the electrical insulating medium, as the electrical insulating medium, a great specific gravity oil or the like is employed which has a greater specific gravity than the EA particles 12. More specifically, there are various kinds of fluorine-based oils such as KRYTOX GPL100 manufactured by Dupont Japon, various kinds of fluorine-based inert fluids such as FLUORINERT FC-40 or FC-70 manufactured by Sumitomo 3M Limited, various kinds of fluorine-containing phosphazene oils such as PHOSPHAZENBE OIL OTSUKA PHOSFAROL NF-36 produced by Otsuka Chemical Co., Ltd., and halogen-containing great specific gravity media such as flon-based medium. In addition, if using the EA particles 12 with a specific gravity as relatively light as approximately 1.0, the use of an electrical insulating medium with a specific gravity of approximately 1.2 to 1.3 is acceptable. As such electrical insulating media, there are listed fluorine-containing silicone oils including a FLUOROSILICONE OIL FL-100 manufactured by Shin-Etsu Chemical Co., Ltd., a NEW FLUOROSILICONE OIL FLS400 manufactured by Asahi Garasu Company. and a FLUOROSILICONE OIL FS1265 by produced by Dow Corning Toray silicone Co., Ltd, and halogen-denatured media including chlorinated paraffin.

The electrical insulating medium can be colored if required. When coloring it, it is desirable to use an oil soluble dye or dispersion dye which is of the type that is meltable in the selected electrical insulating medium and maintains the electrical characteristics. There is no problem even if a surface active agent, viscosity controlling agent, antioxidant, stabilizer and so on are included in the electrical insulating medium.

A description will be made hereinbelow in terms of the EA particle concentration effective to the window according to this invention, and further the kinematic viscosity of the electrical insulating medium and the voltage being applied to the EA fluid.

The limitation is not particularly imposed on the concentration of the EA particles 12 in the electrical insulating medium, while it is preferable to be 0.5% to 15% by weight. If the particle concentration is less than 0.5% by weight, the transmitted light control effect is sufficiently unobtainable. When exceeding 15% by weight, the particle density becomes excessively high, with the result that the transparency sensation is not sufficiently obtainable irrespective of the orientation control of the EA particles 12 by the electric field application (which will be described later).

Preferably, the kinematic viscosity of this electrical insulating medium is designed to be 1 cSt to 3000 cSt. If the kinematic viscosity is below 1 cSt, the retention stability of the EA fluid 10 lowers because of much volatile component in the dispersion medium, and on the other hand, if the kinematic is more than 3000 cSt, bubbles are generated therein and difficult to remove. If the bubbles remain in the electrical insulating medium, partial discharge occurs in small areas of the bubbles, which can cause the insulation deterioration. For these reasons, the kinematic viscosity is preferable to be 10 cSt to 1000 cSt, particularly 10 cSt to 100 cSt.

Moreover, the voltage to be applied to the EA fluid 10 is in the range of 0.1 to 5.0 kV/mm, while a voltage higher than this range can also be applied thereto. The voltage being applied is preferable to be in the range of 0.25 to 1.5 kV/mm.

A description will be taken in conjunction with Figs. 3 and 4 in terms of the principle of transmitted light intensity control of Fig. 1 window. Fig. 3 diagrammatically and schematically shows a state in which an voltage is not applied to the first and second transparent electrode layers 4, 5. In the Fig. 3 case, since the EA particles 12 are not subjected to an electric field and, in addition, an electric insulating medium 11 has a greater specific gravity than the EA particles 12, the EA particles 12 results in floating in the electrical insulating medium 11. If in this state light is incident on the housing 7, the incident light is scattered in various directions due to the presence of the EA particles 12, with the result that the housing 7, i.e., the window 1, gets into an opaque state. For example, in a case where a titanium hydroxide based material is employed as the inorganic EA material 14, the housing 7 becomes cloudy. Moreover, If one of, or both, the surface layer 15 and the core body 13 of the EA particle 12 include a coloring material, the housing 7 has a color depending upon that coloring material. If the EA particles 12 have spherical shapes, the scattering of the light occurs in all directions, with the result that there is hardly a possibility that the light is converged in a specific direction.

Secondly, when as shown in Fig. 4 the switch 9 turns into the closed state so that an electric field is applied to between the first and second transparent electrode layers 4, 5, a large number of EA particles 12 are vertically aligned between the first and second transparent electrode layers 4, 5 so as to make chain configurations 30 arranged in parallel to each other. That is, the rate of the EA particles 12 dispersed in the electrical insulating medium 11 is approximately 15% as noted above, i.e., small as a whole, and hence, when the EA particles 12 make the chain configurations 30, spaces considerably larger than the diameters of the EA particles 12 are made between the chain configurations 30, whereupon the light incident on the housing 7 in its thickness direction can pass into the housing 7 without substantially attenuating, so that the housing 7 turns into a transparent state.

According to the above-mentioned operation, i.e., according to whether or not to energize the first and second transparent electrode layers 4, 5, the housing 7 can take the variation between the opaque state and the transparent state.

In addition, since the window 1 can be driven with a voltage of 0.1 to 5.0 kV/mm and with an extremely small current of a maximum of several mA/m², a power of 10 W/m² is enough to drive it, thus constituting an energy-saving system. Furthermore, since the EA particles 12 can make the chain structures simultaneously with the energization to the first and second transparent electrode layers 4, 5, a sufficient responsibility is obtainable. Moreover, if the transmitted light intensity control is made through the EA fluid 10, since the transmitted light intensity is uniformly controllable over all the wavelength areas with no occurrence of absorption of specific light, there is no possibility of heating due to the light absorption, thus providing an energy-unwasted window. Moreover, since the EA particles 12 remain in the same state for a while even if the application of the voltage is cut off after being once oriented in response to the application of the electric field, it is possible that the voltage is intermittently applied to the first and second transparent electrode layers 4, 5, thus allowing an energy-saving drive accordingly.

The maintainable time of the orientation of the EA particles 12 at no application of an electric field is appropriately adjustable in accordance with the kind of the EA particles 12 itself, the kinematic viscosity of the electrical insulating medium 11, and the specific gravities thereof, and so on. That is, if the kinematic viscosity of the electrical insulating medium 11 is low, the maintainable time shortens, and on the other hand, if being high, the maintainable time lengthens. In addition, if the specific gravities thereof are optimized, the gravity sinking due to the difference in specific gravity is prevented so as to exceedingly lengthen the maintainable time.

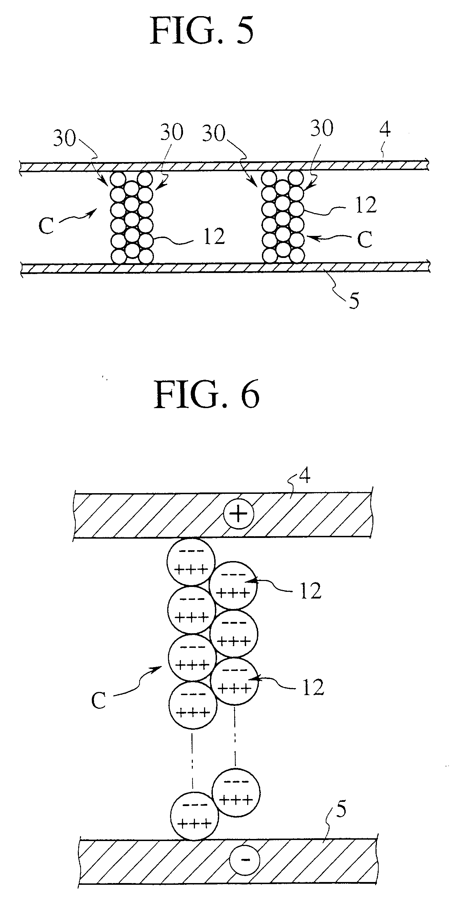

Although in the above illustration the EA particles 12 turn into single-chain configurations which in turn, are arranged in parallel to each other when an electric field is applied thereto, if the quantity of the EA particles 12 increases to exceed 1% by weight, a plurality of chain configurations 30 are joined with each other to organize columns C as shown in Fig. 5. In each column C, the EA particles 12 of the adjacent chain configurations 30, 30 are longitudinally shifted by one from each other. As to this phenomenon, the inventors assume that the EA particles 12, dielectric-polarized into the positive (+) pole portions and the negative (-) pole portions as shown in Fig. 6, becomes more stable in energy when being alternately adjacent to each other due to the attraction between the + pole portions and the - pole portions.

Accordingly, in cases where the content of the EA particles 12 is large, a number of columns C are produced between the electrodes, by which production the transmitted light intensity increases. In this case, since a number of EA particles 12 are grouped into a plurality of columns C, the separation between the adjacent columns C results in being large, which serves to increase the transmitted light intensity.

The reason the diameters of the EA particles 12 are determined to be in the range of 0.1 to 500 mm, more preferably 5 to 200 mm, is that the EA particles 12 function as light scattering type particles or light reflection type particles. As well known, the wavelength of the visible light is in the range of 380 to 780 nm, that is, 0.38 to 0.78 mm, and for the light with such a wavelength being scattered or reflected for the transmitted light control purposes, the diameters of the EA particles 12 need to be at least more than 0.1 mm, more preferably over 5 mm. On the other hand, in a case where ultra-fine conductive particles having diameters smaller than the wavelengths of the visible light causing the Brownian motion, for example, having diameters of 5 nm to several tens nm (= 0.005 to 0.02 mm) are dispersed in the electrical insulating medium 11, the orientation of the ultra-fine particles is considered possible, while in this case the light transmission mechanism is totally different from that in this invention, with the result that the ultra-fine particles are dispersed in a state with no electric field so as to completely permit the transmission of light and are oriented in a state with application of an electric field so as to scatter and attenuate light. That is, undesirable and totally different behaviors take place.

Furthermore, TiBaO$_4$ particles are considered as the foregoing ultra-fine conductive particles, while the specific gravity of TiBaO$_4$ is as great as being in the range between 4 and 6. Supposing that the TiBaO$_4$ particles are made to be large in diameter for the light reflecting purposes, they gravitationally sink for the difference in specific gravity from the electrical insulating medium 11. Thus, for the ultra-fine particles floating in the electrical insulating medium 11, there is a need for use of an electrical insulating medium 11 with a specific gravity of over 4 to 6, while the electrical insulating medium with such a specific gravity does not exist in the world. For this reason, difficulty is experienced to float the TiBaO$_4$ particles.

On the other hand, the necessary specific gravity of the EA particles 12 in this invention is readily adjustable to around 1.2 as described above, which allows the utilization of various kinds of electrical insulating media generally known.

Secondly, considering a coloring aspect, difficulty is experienced to color the foregoing ultra-fine particles, and even assuming that the coloring is possible, the diameters of the particles are too small, for which reason the ultra-fine particles dispersed in the electrical insulating medium 11 is impossible to visibly color. Accordingly, the use of the ultra-fine particles makes only the color of the electrical insulating medium 11 appear. That is, the practicable coloring pattern is just one. For instance, only the variation between transparent red and opaque red is practicable.

Whereas, according to this invention, for example, in a case where the medium is designed to be transparent and red in color and the EA particles are made of be white in color, the color variation between cloudy opaque and red transparency is practicable. Further, in a case where the medium is colorless and transparent and the EA particles are blue in color, the color variation between blue opaque and colorless transparency. Moreover, in the case that the medium is red and the EA particles are blue, the color variation takes place between purple opaque and red transparency. Still further, in the case that the medium is light blue and the EA particles are yellow, the color variation takes place between yellowish green opaque and light blue transparency. In addition, taking notice of the portions to be colored, the coloring of both the core bodies 13 and surface layers 15 of the EA particles 12 and the electrical insulating medium 11 is possible, and the color variation is easy. The surface of the core body 13 of each of the EA particles 12 is covered with an inorganic material , while the color is exposed from the gaps between the inorganic materials, the color of the core body 13 colored is effectively reflective relative to the color of the EA fluid 10.

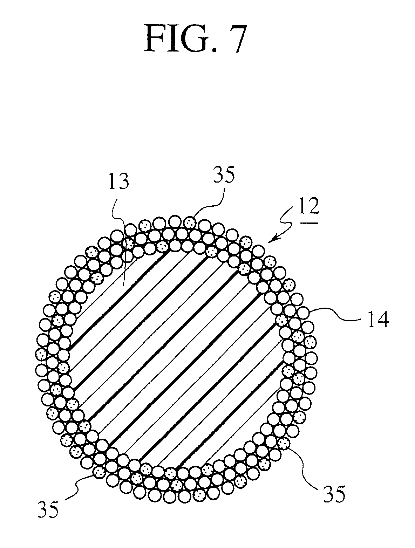

Furthermore, for coloring the surface layers 15 of the EA particles 12, a coloring inorganic pigment 35 can be mixed evenly by a necessary quantity into the inorganic and organic composite particles to be used in producing the EA particles 12, thus producing the EA particles 12. In the EA particles 12 thus produced, as shown in Fig. 7, some of inorganic material particles adhered to the periphery of the core body 13 are replaced with the coloring inorganic pigments 35, .... Thus, the coloring of the EA particles 12 becomes possible.

As described above, in the window 1, the hollow housing 7 is provided, at least portions of two opposed parallel surfaces of which are made to be transparent and have the first and second transparent electrode layers 4, 5, and the EA fluid 10 is enclosed within the housing 7. Thus, in response to application of a voltage to the first and second transparent electrode layers 4, 5, a plurality of chain configurations 30, ... are vertically arranged to be spaced from each other, which allows the light to pass through the spaces therebetween. Meanwhile, if the application of the voltage stops, the EA particles 12 are released from the influence of the electric field and float in the electrical insulating medium 11 due to the difference in specific gravity between the EA particles 12 and the electrical insulating medium 11 so as to cover the transparent portions of the housing 7, with the result that the transmitted light intensity decreases so that the window 1 becomes opaque. As a result, the transmitted light intensity is easily controllable with no light shielding members such as curtains, curtain rails and blinds.

In addition, the window 1 according to this invention has a simple structure and its manufacturing cost is extremely lower than those of the conventional liquid crystal devices. For example, the cost of the aforesaid EA fluid is considered below 1/10 of the cost of the liquid crystal material. Still further, the liquid crystal device requires various control circuits and LSIs for the liquid crystal driving, while the window 1 according to this invention has a simple structure as described before and the electric circuit around the power supply basically uses only a switch and electric wires.

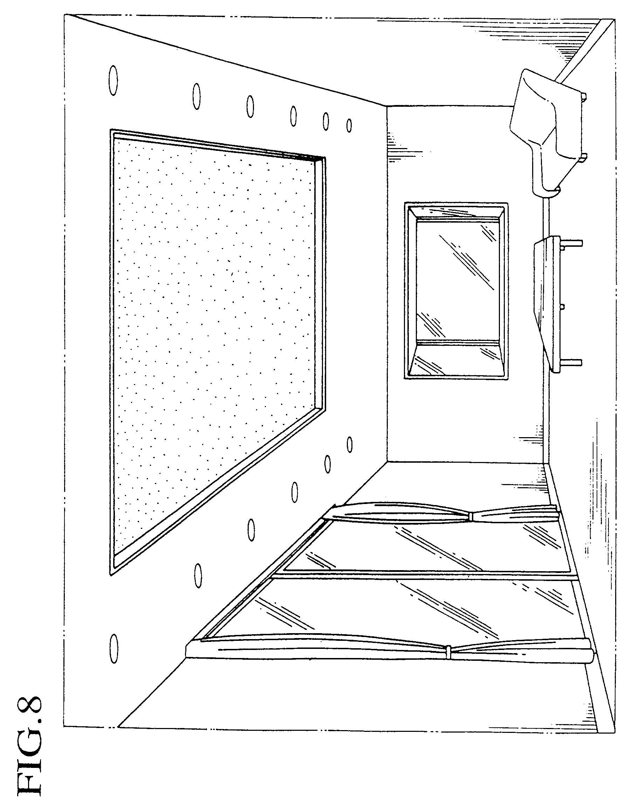

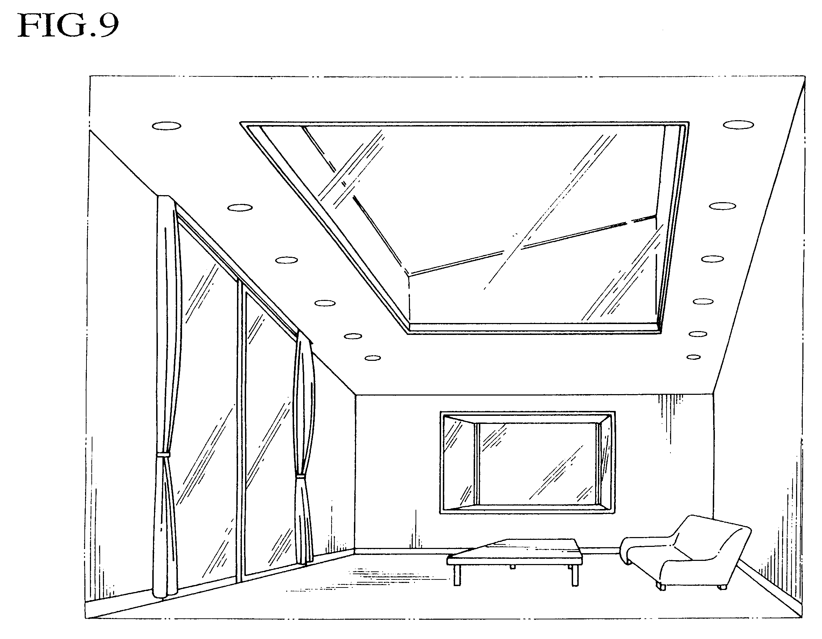

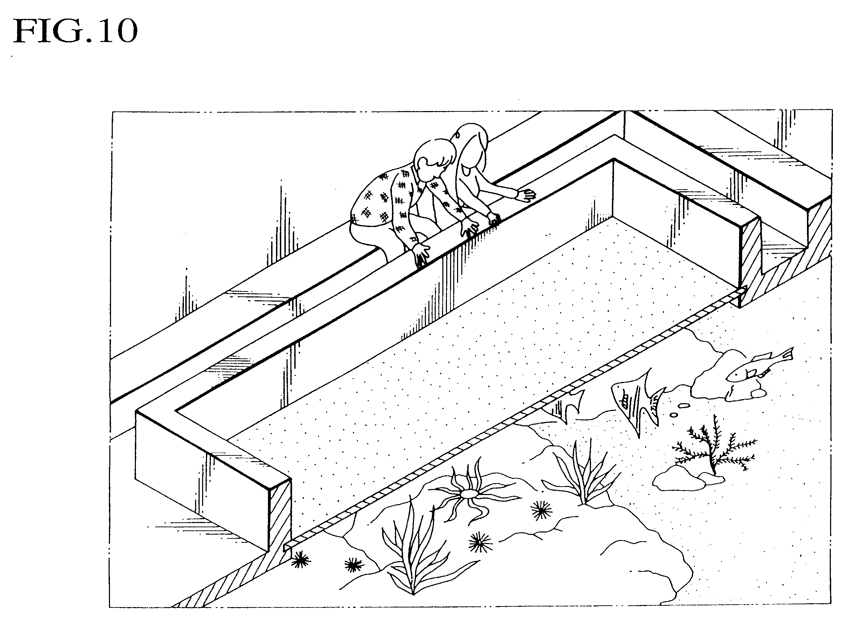

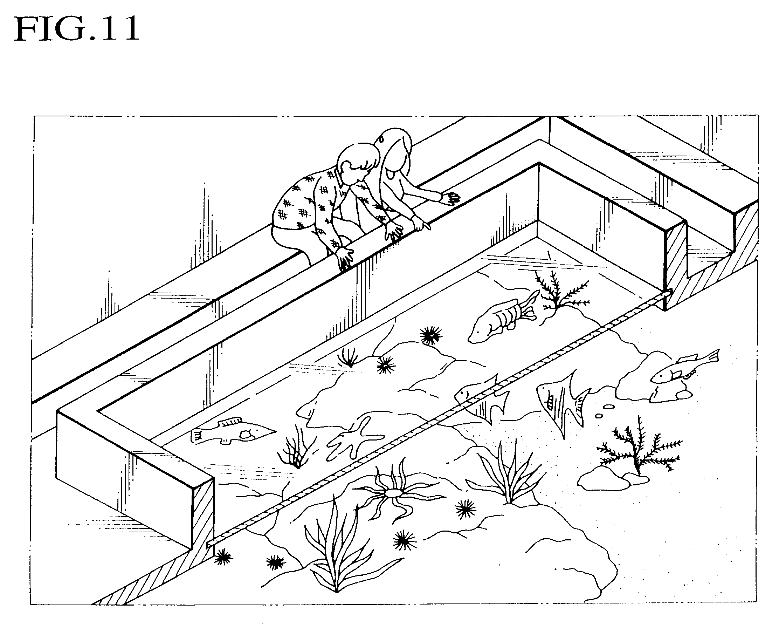

Accordingly, if the window 1 with the foregoing structure is applied to a skylight, in accordance with the ON/OF control of the voltage from the power supply, an opaque state as shown in Fig. 8 can easily be switched to a transparent state as shown in Fig. 9 so that the transmitted light intensity is adjustable. In addition, if as shown in Figs. 10 and 11 it is applied to a peek window to be located at the vessel bottom section of a pleasure boat, the peek window can quickly become transparent when fish gathers or when the boat arrives at a sightseeing spot, which permits the people to see the scenery such as the lake bottoms, river bottoms and sea bottoms. Still further, since the switching from the opaque state to the transparent state is exceedingly rapid, the sightseers can enjoy more impressive sightseeing because the scenery suddenly comes into view.

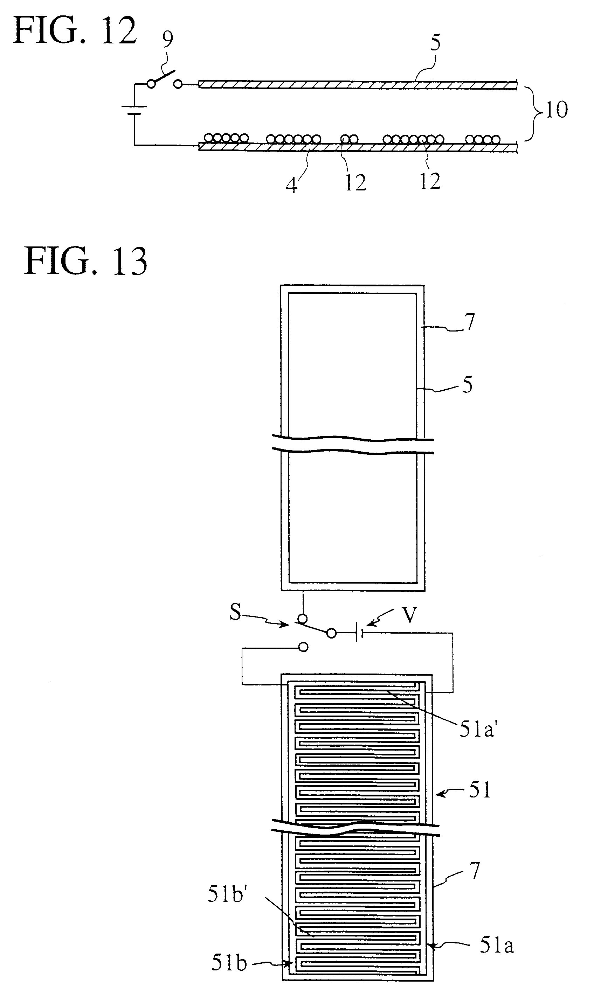

Further, a description will be made with reference to Fig. 12 as to a window according to another embodiment of this invention. The difference of this embodiment from the first-mentioned embodiment is that the specific gravity of the EA particles 12 is greater than the specific gravity of the electrical insulating medium 11 so that the EA particles 12 sink in the electrical insulating medium 11 and the first transparent electrode 4 is positioned at the lower side of the second transparent electrode 5. If satisfying the condition that the EA particles 12 have a greater specific gravity than that of the electrical insulating medium 11, any combination of the EA particles 12 and electrical insulating medium 11 to be used is acceptable. For example, if the specific gravity of the EA particles 12 is approximately 1.2, there are usable methylphenyl polysiloxane based silicone oils, aromatic polycarbonate higher alcohol esters, ester sebacates, and so on. Further, if the specific gravity of the EA particles 12 is approximately 1.0, there are usable small-specific gravity oils such as hydrocarbon based media, petroleum paraffins, polydimethyl siloxane based silicone oils, ring polysiloxane based silicone oils, and transformer oils. The principle of the transparency-opaque operation of this window 1 is the same as that in the aforementioned embodiment.

Moreover, a window according to a further embodiment of this invention will be described with reference to Fig. 13. The difference of this embodiment from the foregoing first- and second-described embodiments, as shown in Fig. 13, relates to the configurations of electrodes. A first transparent electrode 51 is composed of first and second comb-like electrodes 51a, 51b located so that the tooth portions 51a' of the first comb-like electrode 51a are alternately placed or inserted into the spaces between the tooth portions 51b' of the second comb-like electrode 51b so as to substantially cover the whole of one inner surface of a housing 7. The tooth portions 51a', 51b' of the first and second comb-like electrodes 51a, 51b extend in the width direction of the housing 7 and are alternately arranged successively in the longitudinal direction of the housing 7.

The first comb-like electrode 51a is connected through a power supply V to one terminal (movable contact) of a switch S, the other terminal (fixed contacts) of the switch S being selectively coupled to a second transparent electrode 5 and the second comb-like electrode 51b. The switch S comes into connection with the second transparent electrode 5 side, the EA particles 12 are vertically aligned between the tooth portions 51a' of the first comb-like electrode 51a and the second transparent electrode 5 so as to form chain configurations 30, ... as shown in Fig. 4 or 5. For this reason, the light can pass into the spaces between the chain configurations 30, ..., with the result that the housing 7 changes from an opaque state to a transparent state. This means increase in transmitted light intensity of the housing 7.

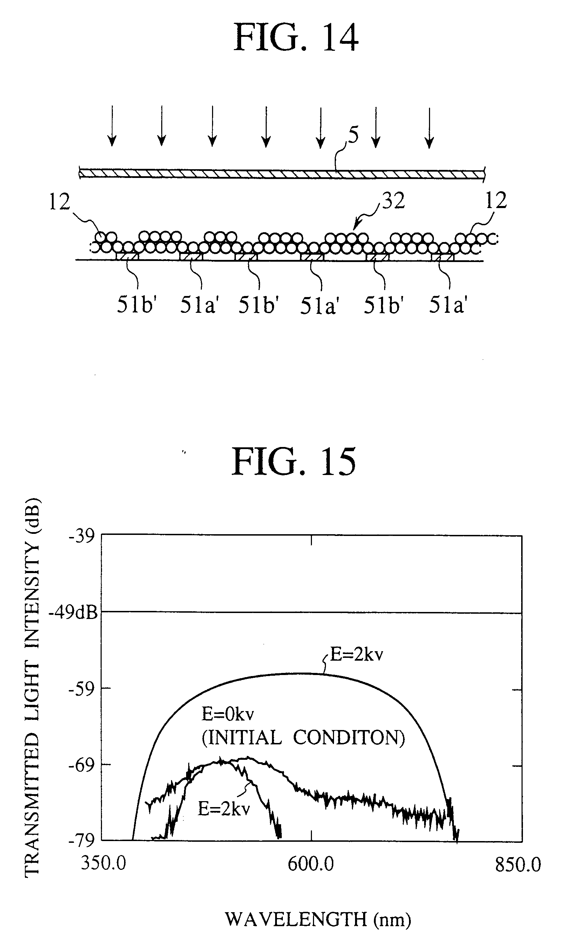

On the other hand, when the switch S turns into connection with the second comb-like electrode 51b, the EA particles 12 are aligned along the surfaces of the housing 7 between the tooth portions 51a of the first comb-like electrode 51a and the tooth portions 51b' of the second comb-like electrode 51b as shown in Fig. 14 so as to form a plane configuration 32. Accordingly, this plane configuration 32 shuts out the light incident on one surface of the housing 7, with the result that the housing 7 inhibits the light transmission and the window 1 becomes opaque.

Thus, in accordance with the switching operation of the switch S, the EA particles 12 can quickly float or sink in the electrical insulating medium 11, in other words, the responsibility of the switching between the opaque state and the transparent state improves.

Experimental Examples

An ITO (indium tin oxide) film was formed on each of two window glass plates to produce the first and second transparent electrodes 4, 5 substantially covering the whole window glass plates. The two ITO glass plates, each having a thickness of 1.0 mm, were disposed in opposed, parallel relation to each other to be spaced by 2 mm from each other so that the first and second transparent electrodes 4, 5 face each other. The circumferential sections of the two ITO glass plates were sealed with sealing members 6, ... made of a resin. The sealing members 6, ... had an injection hole, through which the EA fluid 10 was injected. The injection hole was closed after the injection, thus producing the window 1 according to this invention.

A description will be made hereinbelow in terms of a producing process of the EA fluid 10.

A mixture of a titanium hydroxide (common name: hydrous titanium oxide produced by Ishihara Sangyo Co., Ltd., C-II), a butyl acrylate, a 1,3-butylene glycoal dimethacrylate and a polymerization initiator was dispersed in water containing a tertiary calcium phosphate as a dispersing stabilizer and suspension-polymerized while being stirred at a temperature of 60°C for one hour. The resultant product was filtered and acid-cleaned before water-cleaned and dried, thus obtaining inorganic and organic composite particles 12. Thereafter, using a jetstream agitator (hybridizer, manufactured by Nara Kikai Seisakusho Co., Ltd.), the inorganic and organic composite particles obtained were agitated with jet stream, before surface-polished, thereby producing the EA particles 12. The specific gravity of the produced particles was 1.157, the average diameter thereof was 13.7 mm. The EA particles 12 were put by 4% by weight into silicone oils (produced by Toshiba Silicone Co., Ltd., TSF451 series) with a kinematic viscosity of 10 cSt and a specific gravity of 0.935, thus obtaining the EA fluid 10.

Fig. 15 shows a wavelength dependency of the transmitted light intensity of the EA fluid 10 taken in accordance with the switching operation of the switch S shown in Fig. 13. In this case, the EA particles 12 were colored in blue. The coloring of the EA particles 12 was achieved in production with 20% by weight of the inorganic EA material 14 for formation of the surface layer 15 being replaced with a blue pigment. In Fig. 15, a curve (1) indicated by E = 2kV shows the transmitted light intensity obtained when a voltage of 2 kV was applied through the switch S to between the first and second comb-like electrodes 51a, 51b. In addition, a curve (2) indicated by E = 2kV (positioned above the curve (1)) shows the transmitted light intensity obtained in a case where a voltage of 2 kV is applied through the switch S to between the first comb-like electrode 51a and the second transparent electrode 5. As obvious from these curves, when the energization was made to the first comb-like electrode 51a and the second transparent electrode 5, the EA particles 12 were aligned vertically between the first and second transparent electrodes 51, 5 so that light can pass into the housing 7 over a wide wavelength range. On the other hand, when the energization was made to the first and second comb-like electrodes 51a, 51b, the EA particles 12 were aligned therebetween to form a plane configuration. This extremely decreased the transmitted light intensity.

It should be understood that the foregoing relates to only preferred embodiments of the present invention, and that it is intended to cover all changes and modifications of the embodiments of the invention herein used for the purposes of the disclosure, which do not constitute departures from the spirit and scope of the invention. For example, although in the third embodiment the first transparent electrode 51 is constructed with the comb-like electrodes, in this invention the electrode configurations are not limited to those as illustrated, but it is also possible to employ different configurations such as spiral configurations and circular configurations as long as two or more kinds of electrodes are disposed to be adjacent to each other. In addition, this invention is not limited to the accurately parallel disposition of the transparent substrates 2, 3. It is also acceptable that both are slightly inclined relative to each other.

## Claims

1. A window characterised by comprising:

   a hollow housing (7) having two surfaces (2, 3) substantially parallel to each other, at least a portion of each of which is transparent, and which are disposed in opposed relation to each other;

   first transparent electrode means (4) formed on one (2) of said opposed surfaces (2, 3) of said housing (7);

   second transparent electrode means (5) formed on the other surface (3) of said housing (7); and

   an electro-optical fluid composition (10) produced by adding electric alignment solid particles (12) into an electrical insulating medium (11) and packed within said housing (7).

2. A window as set forth in claim 1, characterised in that said electric alignment solid particles (12) are in a floating state in said electrical insulating medium (11).

3. A window as set forth in claim 1, characterised in that said electric alignment solid particles (12) are in a sinking state in said electrical insulating medium (11).

4. A window as set forth in claim 1, characterised in that said first transparent electrode means (51) comprises one or more first line electrodes (51a) and one or more second line electrodes (51b), and said second transparent electrode means (5) comprises one plane electrode.

5. A window as set forth in claim 4, characterised in that said electric alignment solid particles (12) are in a floating state in said electrical insulating medium (11), and said first transparent electrode means (51) is positioned above said second transparent electrode (5).

6. A window as set forth in claim 4, characterised in that said electric alignment solid particles (12) are in a sinking state in said electrical insulating medium (11), and said first transparent electrode means (51) is positioned under said second transparent electrode (5).

7. A window as set forth in claim 1, characterised in that said electric alignment solid particles (12) are inorganic and organic composite particles each of which is composed of a core body (13) made of a polymer compound and a surface layer (15) including an inorganic material (14) exhibiting an electric alignment effect.

8. A window as set forth in claim 7, characterised in that at least one of said surface layer (15), said core body (13) and said electrical insulating medium (11) includes a coloring material (35).

# FIG.1

# FIG. 2

# FIG. 3

# FIG. 4

# FIG. 5

# FIG. 6

# FIG. 7

FIG.8

FIG.9

FIG.10

FIG.11

# FIG. 12

# FIG. 13

# FIG. 14

# FIG. 15